# EUROPÄISCHE PATENTSCHRIFT

(11) **EP 3 649 683 B1**
(45) Veröffentlichungstag und Bekanntmachung des Hinweises auf die Patenterteilung: **27.10.2021**
(21) Anmeldenummer: 18737509.2
(22) Anmeldetag: 25.06.2018
(51) Int. Cl.: H01M 50/538, H01M 50/543, B23K 26/08, B23K 26/244

(54) **VERFAHREN UND VORRICHTUNG ZUR HERSTELLUNG EINES AKKUMULATORS UND AKKUMULATOR**
METHOD AND APPARATUS FOR PRODUCING A RECHARGEABLE BATTERY AND RECHARGEABLE BATTERY
PROCÉDÉ ET DISPOSITIF POUR LA FABRICATION D'UN ACCUMULATEUR ET ACCUMULATEUR

(30) Priorität: 03.07.2017 DE 102017006229
(43) Veröffentlichungstag der Anmeldung: 13.05.2020
(73) Patentinhaber: Monbat New Power GmbH, 99734 Nordhausen (DE)
(72) Erfinder: DEUTMEYER, Michael, 22605 Hamburg (DE)
(74) Vertreter: Freischem & Partner Patentanwälte mbB
(86) Internationale Anmeldenummer: PCT/EP2018/066863
(87) Internationale Veröffentlichungsnummer: WO 2019/007722

(56) Entgegenhaltungen:
- EP-A1- 2 061 106
- DE-A1-102012 018 129

## Beschreibung

Die Erfindung betrifft ein Verfahren zur Herstellung eines Akkumulators, insbesondere ein Verfahren zur Herstellung einer Elektrodenableitung eines Akkumulators und einen nach dem erfindungsgemäßen Verfahren herstellbaren Akkumulator.

Bei modernen Akkumulatoren werden in zunehmendem Maße höhere Anforderungen an das Verhältnis von Bauraum zur Leistung gestellt. Hierdurch ergibt sich eine Vielzahl technischer Herausforderungen. Eine ist es, die Elektroden effizient zu kontaktieren.

Nach dem Stand der Technik werden hierfür Metallfolien verwendet, die flächig mit den Elektroden, also Anode und Kathode, verbunden sind.

Um den Akkumulator selbst mit einer technischen Einrichtung zu koppeln, weist ein Akkumulator regelmäßig geeignet gestaltete Pole auf. Diese dienen der Herstellung des elektrischen Kontakts zwischen dem Akkumulator und der technischen Einrichtung, in der der Akkumulator verwendet wird. Hierfür müssen die Pole gewissen geometrischen Anforderungen genügen. Weiterhin ist eine hinreichend robuste Ausführung der Pole notwendig, um gegebenenfalls auch einen häufigen Ein- und Ausbau der Akkumulatoren zu ermöglichen.

Es versteht sich daher, dass sich die Metallfolien selbst in der Praxis nicht als Pole eignen. Es wird daher notwendig, zwischen den Polen und der Metallfolie eine geeignete elektrische Verbindung zu schaffen. Hierfür werden Kontaktelemente als zusätzliche Bauteile verwendet, die eine elektrisch leitende Verbindung zwischen den Metallfolien und den Polen des Akkumulators herstellen.

Das Herstellen einer elektrisch leitenden Verbindung zwischen Kontaktelement und Metallfolie stellt hierbei eine technische Herausforderung dar. Nach dem Stand der Technik kommen hier insbesondere Lötverfahren zum Einsatz. Ebenso sind mechanische Verfahren, wie - Anpressen oder Anklemmen - bekannt. Diese Verfahren können jedoch zur Bildung von Lokalelementen führen, wodurch es zu Korrosion und/oder eine Verminderung der Leitfähigkeit kommt.

Andere bekannte Kontaktierungsarten, zum Beispiel das Verkleben mit leitfähigem Kleber und/oder das Ultraschallschweißen, können zur Versprödung und damit schlimmstenfalls zum Bruch von Bestandteilen des Akkumulators - gegebenenfalls mit Unterbrechung des Stromweges - führen.

Aus der DE 102 50 839 A1 ist ein Verfahren zum Herstellen eines Akkumulators bekannt, bei dem ein Kontaktelement durch ein Laserschweißverfahren mit einer Metallfolie verbunden wird. Dabei kommen Laser zum Anheften der Folie an dem Kontaktelement zum Einsatz. Das Verfahren konnte sich in der Praxis jedoch nicht durchsetzen, da insbesondere aufgrund von Reflexionen der zu verschweißenden Metalle in der Praxis unbefriedigende Ergebnisse erzielt worden sind. Ähnliches gilt für die in der DE 10 2012 018 129 A1 und die in der EP 2 061 106 A1 offenbarten Akkumulatoren und Verfahren.

Aufgabe der Erfindung ist es daher, ein Verfahren zur Herstellung eines Akkumulators und einen Akkumulator zur Verfügung zu stellen, bei denen die vorgenannten Nachteile nicht oder zumindest im geminderten Umfang auftreten.

Die Aufgabe wird gelöst durch ein Verfahren und einen Akkumulator mit den Merkmalen der unabhängigen Ansprüche. Die Merkmale der abhängigen Ansprüche betreffen vorteilhafte Ausführungsformen.

Erfindungsgemäß wird ein Randbereich der Metallfolie mit einer ersten Seite des Kontaktelements in Kontakt gebracht und durch die Beaufschlagung einer von der ersten Seite des Kontaktelements abgewandten zweiten Seite des Kontaktelements mit Laserstrahlung mit dem Kontaktelement verschweißt.

Es hat sich überraschenderweise gezeigt, dass auf diese Weise eine zuverlässige Verschweißung zwischen der Metallfolie und dem Kontaktelement erzielt werden kann.

Hierbei ist es besonders vorteilhaft, wenn das Kontaktelement aus dem gleichen Material besteht wie die Metallfolie. Als Materialien kommen insbesondere die Metalle Kupfer und/oder Aluminium sowie Aluminiumlegierungen und/oder Kupferlegierungen in Betracht.

### Akkumulator

Bei dem Akkumulator handelt es sich vorzugsweise um einen Lithium-Ionen-Akkumulator. Lithium-Ionen-Akkumulatoren ermöglichen die Speicherung vergleichsweise große Mengen Energie bei geringem Gewicht und Raumbedarf. Das erfindungsgemäße Verfahren bietet daher insbesondere bei der Herstellung dieser Akkumulatoren einen hohen Mehrwert.

Bevorzugt weist der Akkumulator eine, zumindest im Wesentlichen, zylindrische Geometrie auf. Unter einer zumindest im Wesentlichen zylindrischen Geometrie ist insbesondere eine Geometrie zu verstehen, bei der die Hauptabmessungen des Akkumulators eine zylindrische Geometrie bilden. Einzelne Elemente des Akkumulators, beispielsweise die Pole, können hierbei eine von einer strengen Zylinderform abweichende Gestaltung aufweisen. Akkumulatoren mit zylindrischer Geometrie sind als Bauform bereits standardisiert, weshalb regelmäßig ein einfacher Austausch der Akkumulatoren möglich ist.

Bevorzugt sind die Metallfolien, welche insbesondere die Anode und/oder die Kathode des Akkumulators kontaktieren, gemeinsam mit anderen flächigen Bestandteilen des Akkumulators, wie insbesondere den Elektroden des Akkumulators, vorzugsweise spiralförmig, aufgewickelt.

Der Akkumulator nimmt durch die spiralförmige Aufwicklung eine, zumindest im Wesentlichen, zylindrische Form an. Die Achse der spiralförmigen Wicklung entspricht hierbei bevorzugt der Mittelachse des Zylinders. Unter der Achse ist hierbei insbesondere das linienförmige Zentrum der spiralförmigen Wicklung zu verstehen. Eine physische Achse im Sinne eines entsprechenden Bauteils kann vorhanden sein, ist jedoch nicht zwingend notwendig.

Alternativ zur vorstehend beschriebenen spiralförmigen Wicklung sind jedoch auch andere Aufbauten des Akkumulators denkbar. So kann die Metallfolie beispielsweise mit weiteren flächigen Bestandteilen des Akkumulators zu einem Block gefaltet werden. Auch hierbei ist es vorteilhaft, wenn die Metallfolie in einem, zumindest im Wesentlichen, rechten Winkel mit dem Kontaktelement in Kontakt gebracht und verschweißt wird.

Es ist vorteilhaft, wenn die Metallfolie, insbesondere der mit dem Kontaktelement zu verbindende Bereich der Metallfolie, gegenüber den anderen flächigen bzw. schichtförmigen Bestandteilen des Akkumulators, wie beispielsweise der Kathode, der Anode oder einer weiteren Metallfolie, in Richtung des Kontaktelements, vorzugsweise in Richtung der Achse, vorsteht. Hierbei ist es vorteilhaft, wenn die Metallfolie gegenüber den anderen schichtförmigen Bestandteilen des Akkumulators wenigstens 1 mm, vorzugsweise wenigstens 3 mm, und/oder höchstens 8 mm, vorzugsweise höchstens 6 mm, vorsteht. Dieser vorstehende Bereich der Metallfolie ermöglicht es, die Metallfolie mit dem erfindungsgemäßen Verfahren zu kontaktieren, wobei das Risiko, andere schichtförmige Bestandteile des Akkumulators durch die Verschweißung zu beeinträchtigen und/oder zu beschädigen, ausgeschlossen oder zumindest gesenkt wird.

Es ist vorteilhaft, wenn ein Bereich der Metallfolie umgebogen wird. Das Umbiegen des Bereichs der Metallfolie kann zweckmäßigerweise vor dem Aufwickeln der Metallfolie erfolgen. Es kann eine Vielzahl von Biegeverfahren zum Einsatz kommen, bevorzugt handelt es sich um ein Bördelverfahren. Das Verschweißen der Metallfolie mit dem Kontaktelement erfolgt dann vorzugsweise im Bereich der erzeugten Biegung. Hierdurch wird die Anlagefläche der Metallfolie am Kontaktelement vergrößert, was sich positiv auf die Verschweißung auswirkt. Bei der Biegung kann es sich beispielsweise um eine Umbiegung um 180° handeln. Es sind jedoch auch andere Gestaltungen der Biegung denkbar, insbesondere kann auch ein mehrfaches Umbiegen erfolgen. Es versteht sich in diesem Zusammenhang, dass unter dem Randbereich, der mit dem Kontaktelement verbunden wird, im Zweifel nicht der Randbereich der ursprünglichen Metallfolie vor dem Umbiegen zu verstehen ist, sondern vielmehr der Teil der Metallfolie, der nach dem Umbiegen der Metallfolie den durch das Umbiegen erzeugten neuen Rand der Metallfolie bildet.

In vorteilhafter Weise kann das erfindungsgemäße Verfahren genutzt werden, um sowohl die Anode, als auch die Kathode mit jeweils einer Metallfolie elektrisch zu kontaktieren. Hierbei wird das erfindungsgemäße Verfahren bevorzugt derart durchgeführt, dass ein erstes Kontaktelement mit einer ersten Metallfolie und ein zweites Kontaktelement mit einer zweiten Metallfolie verschweißt wird. Die Kontaktelemente befinden sich dabei vorteilhafterweise an voneinander abgewandten Enden des Akkumulators. Hierdurch kann bei einem - aufgewickelten oder gefalteten - schichtförmigen Aufbau des Akkumulators jede der Metallfolien sowohl gegenüber der jeweils anderen Metallfolie, als auch gegenüber den weiteren schichtförmigen Bestandteilen des Akkumulators in Richtung des Kontaktelements, mit dem die jeweilige Metallfolie verbunden wird, vorstehen.

Die Dicke des flächigen Kontaktelements beträgt bevorzugt wenigstens 0,05 mm, besonders bevorzugt wenigstens 0,15 mm, und/oder bevorzugt höchstens 1,5 mm, besonders bevorzugt höchstens 0,6 mm.

Es ist vorteilhaft, wenn die Metallfolie an einen vorspringenden Bereich der ersten Fläche des Kontaktelements angeschweißt wird. Ein derartiger vorspringender Bereich an dem Kontaktelement ermöglicht es, einen definierten lokalen Kontakt zwischen der Metallfolie und dem Kontaktelement herzustellen, an dem die Schweißung erfolgt. Dabei weist das Kontaktelement bevorzugt an seiner dem vorspringenden Bereich gegenüberliegenden Fläche einen zurückspringenden Bereich auf. Dieser ist bevorzugt hinsichtlich seiner Form komplementär zu dem vorspringenden Bereich gestaltet. Zweckmäßigerweise können der vorspringende Bereich und der zurückspringende Bereich gemeinsam als Sicke in dem Kontaktelement ausgeführt sein. Diese Gestaltung hat den Vorteil, dass sie in einfacher Weise herzustellen ist und dazu führt, dass die Dicke des Kontaktelements im betroffenen Bereich zumindest annähernd konstant bleibt.

Der vorspringende Bereich springt bevorzugt um wenigstens 0,1 mm, besonders bevorzugt um wenigstens 0,3 mm, und/oder bevorzugt um höchstens 0,8 mm, besonders bevorzugt um höchstens 0,5 mm gegenüber der umliegenden ersten Fläche des Kontaktelements vor.

Der vorspringende Bereich bzw. die Sicke ist bevorzugt linienförmig gestaltet und weist eine Breite von bevorzugt wenigstens 0,1 mm, besonders bevorzugt von wenigstens 0,2 mm, und/oder bevorzugt um höchstens 1,5 mm, besonders bevorzugt von höchstens 3 mm auf. Dabei kreuzt sich in der Ebene, in der die Metallfolie mit dem vorspringenden Bereich in Kontakt gelangt, der vorspringende Bereich bevorzugt mit der Metallfolie. Bei gefalteter und/oder aufgewickelten Bauweise des Ackumulators ergeben sich so eine Mehrzahl einzelner Berührungspunkte zwischen dem Randbereich der Metallfolie und dem Kontaktelement, was zu einer zuverlässigen Verschweißung an diesen Stellen führt.

Die Metallfolie weist bevorzugt eine Dicke von wenigstens 0,001 mm, besonders bevorzugt von wenigstens 0,05 mm, und/oder bevorzugt von höchstens 0,1 mm, besonders bevorzugt von höchstens 0,02 mm auf.

### Polelement

Es ist vorteilhaft, wenn ein Polelement zur Bildung des Pols des Akkumulators mit dem Kontaktelement verbunden, insbesondere verschweißt, wird. Auf diese Weise kann das Kontaktelement in seiner Geometrie, die bevorzugt flächig bzw. plättchenförmig ist, unabhängig von der Form des Pols gestaltet werden. Dies ist insbesondere deswegen von Vorteil, da die Form des Pols Beschränkungen unterliegt, die regelmäßig von der geplanten Verwendung des hergestellten Akkumulators und/oder technischen Standards abhängen.

Die Verbindung des Polelements mit dem Kontaktelement kann beispielsweise durch eine Überlappungs-Verschweißung oder eine Kehlnaht-Verschweißung erfolgen.

In vorteilhafter Weise kann die Verbindung des Polelements mit dem Kontaktelement mit demselben Laser erfolgen wie die Verschweißung der Metallfolie mit dem Kontaktelement. Dies ermöglicht es beispielsweise, die Verschweißung der Metallfolie mit dem Kontaktelement und die Verschweißung des Polelements mit dem Kontaktelement in der gleichen Vorrichtung vorzunehmen, was die Herstellung des Akkumulators vereinfacht.

Das Polelement kann beispielsweise ein Gewinde zur Bildung des Pols des Akkumulators aufweisen. Mit einem derartigen Gewinde kann der Akkumulator zuverlässig elektrisch mit der von dem Akkumulator versorgten Einrichtung verbunden werden.

Es ist vorteilhaft, wenn das Polelement eine Dichtfläche aufweist. Die Dichtfläche dient insbesondere der Verbindung des Polelements mit einer äußeren Hülle des Akkumulators. Auf diese Weise kann ein dichter und vorzugsweise elektrisch isolierter Akkumulator geschaffen werden, wobei die Polelemente zum Zwecke der elektrischen Kontaktierung des Akkumulators zugänglich bleiben.

Bevorzugt überdeckt das Polelement - zumindest teilweise - Schweißnähte zum Verbinden der Metallfolie mit dem Kontaktelement. Eine solche Bauweise des Ackumulators lässt sich insbesondere erzeugen, indem zunächst die Metallfolie mit dem Kontaktelement, und danach das Kontaktelement mit dem Polelement verschweißt wird. Auf diese Weise kann das Polelement und insbesondere die Dichtfläche des Polelements in einem Bereich auf der zweiten Fläche des Kontaktelements angeordnet werden, der ebenfalls zum Verschweißen des Kontaktelements mit der Metallfolie genutzt wird.

Es ist vorteilhaft, wenn das Polelement beim Verschweißen mit dem Kontaktelement an das Kontaktelement angepresst wird. Es hat sich gezeigt, dass auf diese Weise die Bildung von Spalten, zu denen es zwischen dem Polelement und dem Kontaktelement kommen kann, wirksam verhindert werden kann.

### Laser

Bevorzugt handelt es sich bei dem Laser um einen Faserlaser. Faserlaser, die auch als Faser bezeichnet werden, nutzen den dotierten Kern einer Glasfaser als aktives Medium. Der Vorteil der Faserlaser ist, dass durch die mögliche große Länge der laseraktiven Faser eine hohe Verstärkung möglich ist.

Der Laser wird hierbei vorzugsweise kontinuierlich, also als Dauerstrich-Laser, betrieben. Bei diesem Betrieb wird der Laserstrahl insbesondere nicht gepulst. Es hat sich gezeigt, dass sich mit dem kontinuierlichen Betrieb des Lasers besonders gute Ergebnisse hinsichtlich der Verschweißung erzielen lassen.

Bevorzugt beträgt die mittlere Leistung, insbesondere die konstante Leistung des Lasers im kontinuierlichen Betrieb des Lasers beim Verschweißen der Metallfolie mit dem Kontaktelement wenigstens 100 W, besonders bevorzugt wenigstens 200 W und/oder höchstens 700 W, besonders bevorzugt höchstens 500 W. Bei diesen Leistungen konnten besonders gute Ergebnisse hinsichtlich der Verschweißung erzielt werden.

Wenn mit dem Laser ebenfalls das Polelement mit dem Kontaktelement verschweißt wird, so ist es sinnvoll, die Laserleistung zu diesem Zweck zu erhöhen. Beim Verschweißen des Polelements mit dem Kontaktelement beträgt die mittlere Leistung, insbesondere die konstante Leistung des Lasers im kontinuierlichen Betrieb bevorzugt wenigstens 500 W, besonders bevorzugt wenigstens 700 W, und/oder bevorzugt höchstens 1500 W, besonders bevorzugt höchstens 1000 W.

Die Wellenlänge des Lasers beträgt vorzugsweise 1070 nm. Mit einem Laser dieser Wellenlänge können gute Ergebnisse erzielt werden, zudem sind Laser dieser Wellenlänge kommerziell verfügbar.

Bevorzugt wird ein Singlemode-Laser verwendet. Bei diesen Lasern werden lediglich Wellen einer einzigen gewünschten Mode verstärkt, während andere Moden unterdrückt werden. Derartige Laser weisen im Idealfall lediglich eine einzige, schmale Spektrallinie auf. Hierdurch erreicht der Laserstrahl eine hohe optische Qualität, was sich insbesondere auf dessen gute Fokussierbarkeit auswirkt.

Bevorzugt wird der Laser mit einer Fokussieroptik fokussiert. Eine solche Fokussieroptik ermöglicht die Bündelung des Laserstrahls. Es hat sich gezeigt, dass für das erfindungsgemäße Verfahren Fokussieroptiken mit einer Brennweite von wenigstens 10 mm, vorzugsweise wenigstens 100 mm und/oder höchstens 5000 mm, vorzugsweise höchstens 500 mm, zu besonders guten Ergebnissen führen. Dies gilt sowohl für die Verschweißung der Metallfolie mit dem Kontaktelement, als auch für die Verschweißung des Kontaktelements mit dem Polelement.

Bevorzugt weist der verwendete Laserstrahl einen Fokusdurchmesser von wenigstens 1 µm, vorzugsweise wenigstens 10 µm und/oder höchstens 500 µm, vorzugsweise höchstens 50 µm auf. Es hat sich gezeigt, dass sich mit diesen Fokusdurchmessern eine besonders gute Verschweißung der Metallfolie mit dem Kontaktelement erzielen lässt. Dies gilt sowohl für die Verschweißung der Metallfolie mit dem Kontaktelement, als auch für die Verschweißung des Kontaktelements mit dem Polelement.

### Strahlbewegung

Erfindungsgemäß wird der Auftreffpunkt des Lasers auf dem Kontaktelement, bei dem es sich vorzugsweise um den Fokus des Laserstrahls handelt, entlang einer Bewegungsbahn bewegt, die sich aus der Überlagerung einer Vorschubbewegung und einer oszillierenden Bewegung ergibt. Beim Verschweißen des Kontaktelements mit dem Polelement gilt dies gegebenenfalls für den Aufreffpunkt des Laserstrahls auf dem Polelement.

Bei der Vorschubbewegung handelt es sich um die Bewegung, mit der der Auftreffpunkt des Lasers dem Verlauf der herzustellenden Schweißnaht folgt. Die Geschwindigkeit, mit der der Auftreffpunkt sich auf der Oberfläche des Kontaktelements bzw. gegebenenfalls des Polelements entlang der Schweißnaht bewegt, wird in diesem Zusammenhang als Vorschubgeschwindigkeit bezeichnet. Die Vorschubgeschwindigkeit beträgt vorzugsweise wenigstens 10 mm/s, vorzugsweise wenigstens 70 mm/s, und/oder höchstens 200 mm/s, vorzugsweise höchstens 150 mm/s. Es hat sich gezeigt, dass sich mit diesen Vorschubgeschwindigkeiten eine vergleichsweise schnelle Herstellung der Schweißnähte mit gleichzeitig hoher Qualität erzielen lässt. Es versteht sich, dass - im Fall der Überlagerung der Vorschubbewegung mit einer oszillierenden Bewegung - nicht die absolute Geschwindigkeit der resultierenden Bewegung in Vorschubrichtung, sondern eine mittlere Bewegungsgeschwindigkeit in Vorschubrichtung als Vorschubgeschwindigkeit anzusehen ist.

Die oszillierende Bewegung, die vorzugsweise von der Vorschubbewegung überlagert wird, weist vorzugsweise eine Frequenz von wenigstens 100 Hz, vorzugsweise wenigstens 500Hz und/oder höchstens 5000 Hz, vorzugsweise höchstens 1500 Hz auf. Die Amplitude der oszillierenden Bewegung beträgt vorzugsweise wenigstens 0,02 mm, vorzugsweise wenigstens 0,1mm, und/oder höchstens 0,5 mm, vorzugsweise höchstens 1mm. Es hat sich gezeigt, dass eine örtliche Leistungsmodulation realisiert werden kann, die eine besonders gute Schmelzbadkontrolle ermöglicht.

Es kann sich bevorzugt um eine kreisförmige oszillierende Bewegung handeln. In diesem Fall entspricht der Radius des durch die oszillierende Bewegung beschriebenen Kreises der Amplitude im Hinblick auf die vorstehend angegebenen Werte. Im Fall komplexer oszillierender Bewegungen, wie beispielsweise einer elliptischen oszillierenden Bewegung, ist entsprechend eine mittlere Amplitude als Amplitude anzusehen.

### Ausführungsbeispiele

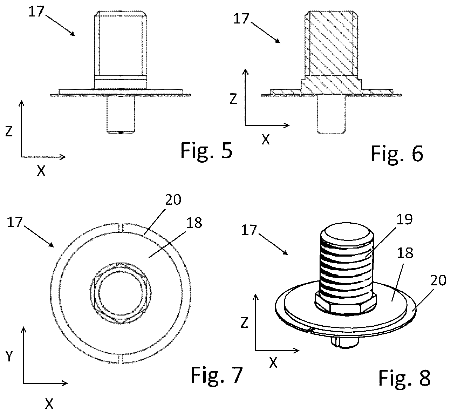

Die Erfindung wird im Folgenden anhand der Figuren 1 bis 8 und durch Ausführungsbeispiele schematisch näher erläutert.
Fig. 1 zeigt eine schematische perspektivische Darstellung eines Teils eines beispielhaften, mit dem erfindungsgemäßen Verfahren hergestellten Akkumulators.
Fig. 2 zeigt eine schematische Darstellung eines beispielhaften Kontaktelements in einer Draufsicht.
Fig. 3 zeigt eine Detaildarstellung einer beispielhaften erfindungsgemäßen Verschweißung der Metallfolie mit dem Kontaktelement.
Fig. 4 zeigt eine schematische Darstellung einer beispielhaften Bewegungsbahn des Lasers beim Verschweißen.
Fig. 5 zeigt eine Seitenansicht eines beispielhaften Polelements.
Fig. 6 zeigt das Polelement in eine Schnittdarstellung.
Fig. 7 zeigt das Polelement in einer Draufsicht.
Fig. 8 zeigt das Polelement in einer perspektivischen Darstellung.

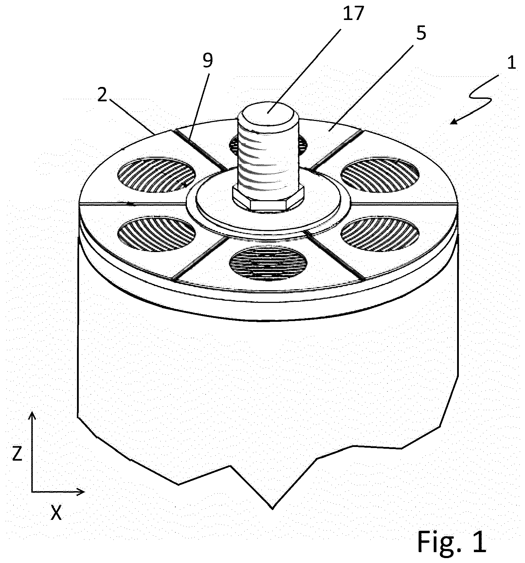

Der beispielhafte erfindungsgemäße Akkumulator 1 weist ein Kontaktelement 2 auf, welches mit einer Metallfolie 3 verschweißt ist. Zur Herstellung des in Fig. 1 dargestellten Akkumulators 1 wird ein Randbereich der Metallfolie 3 mit einer ersten Fläche 4 des Kontaktelements 2 in Kontakt gebracht. Durch die Beaufschlagung einer von der ersten Fläche 4 des Kontaktelements 2 abgewandten zweiten Fläche 5 des Kontaktelements 2 mit einem Laserstrahl 6 wird das Kontaktelement 2 mit der Metallfolie 3 verschweißt.

Dabei ist im Darstellungsbeispiel die Metallfolie 3 mit weiteren flächigen Bestandteilen des Akkumulators, insbesondere den Elektroden, zu einer spiralförmigen Wicklung aufgewickelt. Hieraus ergibt sich ein zylindrischer Aufbau des Akkumulators 1. Die Metallfolie 3 ist im gezeigten Beispiel rechtwinklig zur ersten Fläche 4 des Kontaktelements 2 angeordnet.

Gemäß einer vorteilhaften Ausführungsform weist das Kontaktelement 2 im dargestellten Beispiel eine Öffnung 7, bevorzugt eine Mehrzahl von Öffnungen 7 auf.

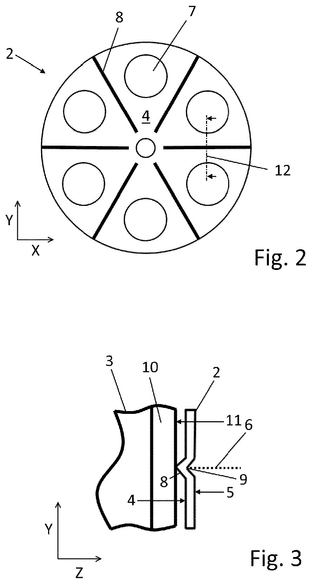

Wie in Fig. 3 dargestellt ist, weist die erste Fläche 4 des Kontaktelements 2 im gezeigten Beispiel eine Mehrzahl vorspringender Bereiche 8 auf. Die vorspringenden Bereiche 8 sind vorteilhaft als Sicken 9 ausgeführt. Die Metallfolie 3 und die vorspringenden Bereiche 8 sind in vorteilhafter Weise derart zueinander orientiert, dass sie sich kreuzen.

Im gezeigten Beispiel weist das Kontaktelement 2 eine Dicke von 0,3 mm auf. Die vorspringenden Bereiche 8 springen gegenüber der ersten Fläche um 0,4 mm vor. Die Metallfolie 3 weist im gezeigten Beispiel einen umgebogenen Bereich 10 auf. Die Metallfolie 3 liegt im Bereich der Biegung 11 an dem vorspringenden Bereich 9 der ersten Fläche 4 des Kontaktelements 2 an. Die Dicke der Metallfolie 3 beträgt bevorzugt 0,01 mm.

Zur besseren Übersichtlichkeit ist die der Fig. 3 entsprechende Schnittlinie 12 in Fig. 2 schematisch eingezeichnet.

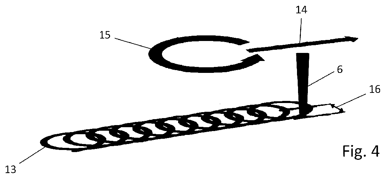

In den nachstehend beschriebenen Ausführungsbeispielen für das erfindungsgemäße Verfahren werden die Metallfolie und das Kontaktelement jeweils mit einem Singlemode-Faserlaser mit einer Wellenlänge von 1070 nm verschweißt. Dabei ergibt sich die in Fig. 4 schematisch dargestellte Bewegungsband 13 des Laserstrahls aus der Überlagerung einer Vorschubbewegung 14 und einer kreisförmig oszillierenden Bewegung 15.

### 1. Ausführungsbeispiel

Gemäß einem ersten Ausführungsbeispiel beträgt die Laserleistung des kontinuierlich betriebenen Lasers 300 W. Die Geschwindigkeit der Vorschubbewegung 14 beträgt 100 mm/s. Die Frequenz der oszillierenden Bewegung 15 beträgt 1000 Hz. Die Amplitude 16 der oszillierenden Bewegung 15 beträgt 0,2 mm. Das Material des Kontaktelements 2 und der Metallfolie 3 ist Kupfer. Die verwendete Fokussieroptik hat eine Brennweite von 160 mm, der Fokusdurchmesser beträgt 14 µm.

### 2. Ausführungsbeispiel

Gemäß einem zweiten Ausführungsbeispiel beträgt die Laserleistung des kontinuierlich betriebenen Lasers 300 W. Die Geschwindigkeit der Vorschubbewegung 14 beträgt 120 mm/s. Die Frequenz der oszillierenden Bewegung 15 beträgt 1000 Hz. Die Amplitude 16 der oszillierenden Bewegung 15 beträgt 0,3 mm. Das Material des Kontaktelements 2 und der Metallfolie 3 ist Aluminium. Die verwendete Fokussieroptik hat eine Brennweite von 160 mm, der Fokusdurchmesser beträgt 14 µm.

### 3. Ausführungsbeispiel

Gemäß einem dritten Ausführungsbeispiel beträgt die Laserleistung des kontinuierlich betriebenen Lasers 400 W. Die Geschwindigkeit der Vorschubbewegung 14 beträgt 110 mm/s. Die Frequenz der oszillierenden Bewegung 15 beträgt 1000 Hz. Die Amplitude 16 der oszillierenden Bewegung 15 beträgt 0,3 mm. Das Material des Kontaktelements 2 und der Metallfolie 3 ist Kupfer. Die verwendete Fokussieroptik hat eine Brennweite von 330 mm, der Fokusdurchmesser beträgt 29 µm.

### 4. Ausführungsbeispiel

Gemäß einem vierten Ausführungsbeispiel beträgt die Laserleistung des kontinuierlich betriebenen Lasers 300 W. Die Geschwindigkeit der Vorschubbewegung 14 beträgt 110 mm/s. Die Frequenz der oszillierenden Bewegung 15 beträgt 1000 Hz. Die Amplitude 16 der oszillierenden Bewegung 15 beträgt 0,3 mm. Das Material des Kontaktelements 2 und der Metallfolie 3 ist Aluminium. Die verwendete Fokussieroptik hat eine Brennweite von 330 mm, der Fokusdurchmesser beträgt 29 µm.

In vorteilhafter Weise kann der Laser im Rahmen des erfindungsgemäßen Verfahrens ebenfalls dazu verwendet werden, ein Polelement 17 an das Kontaktelement 2 anzuschweißen. Das Polelement 17 weist im gezeigten Beispiel eine Dichtfläche 18 auf. Es dient dazu, einen Pol des Akkumulators 1 zur Verfügung zu stellen, der im gezeigten Beispiel zweckmäßigerweise ein Gewinde 19 aufweist. Wie sich insbesondere aus dem Vergleich der Fig. 1 und der Fig. 2 ergibt, überdeckt das Polelement 17 mit seiner Dichtfläche 18 teilweise die Sicken 9, entlang derer die Schweißnähte zwischen Kontaktelement 2 und Metallfolie 3 ausgeführt sind.

Das Anschweißen des Polelements 17 kann beispielsweise im Bereich eines Verbindungsbereichs 20 des Polelements erfolgen. Im gezeigten Beispiel umgibt der Verbindungsbereich 20 die Dichtfläche 18.

Zweckmäßigerweise wird zum Verschweißen des Polelements 17 mit dem Kontaktelement 2 die Laserleistung auf beispielsweise 800 W erhöht. Die Brennweite der verwendeten Fokussieroptik beträgt im Ausführungsbeispiel 330 mm. Die Vorschubbewegung 14 des Laserstrahls wird auch beim beispielhaften Anschweißen des Polelements von einer oszillierenden Bewegung 15 überlagert. Die Frequenz der kreisförmig oszillierenden Bewegung beträgt beispielhaft 800 Hz, die Amplitude 0,2 mm. Die Vorschubgeschwindigkeit kann beispielsweise 100 mm/s betragen. Im gezeigten Beispiel besteht das Polelement 17 in vorteilhafter Weise aus dem gleichen Material wie das Kontaktelement 2, bevorzugt aus Kupfer oder Aluminium.

### Bezugszeichenliste:

- 1: Akkumulator
- 2: Kontaktelement
- 3: Metallfolie
- 4: erste Fläche
- 5: zweite Fläche
- 6: Laserstrahl
- 7: Öffnung
- 8: vorspringender Bereich
- 9: Sicke
- 10: umgebogene Bereich
- 11: Bereich der Biegung
- 12: Schnittlinie
- 13: Bewegungsbahn
- 14: Vorschubbewegung
- 15: oszillierende Bewegung
- 16: Amplitude
- 17: Polelement
- 18: Dichtfläche
- 19: Gewinde
- 20: Verbindungsbereich

## Patentansprüche

1. Verfahren zur Herstellung eines Akkumulators (1), wobei zur Kontaktierung einer Elektrode des Akkumulators (1) eine Metallfolie (3) mit einem Kontaktelement (2) verschweißt wird, wobei ein Randbereich der Metallfolie (3) mit einer ersten Fläche (4) des Kontaktelements (2) in Kontakt gebracht und durch die Beaufschlagung einer von der ersten Fläche (4) des Kontaktelements (2) abgewandten zweiten Fläche (5) des Kontaktelements (2) mit einem Laserstrahl (6) mit dem Kontaktelement (2) verschweißt wird,
**dadurch gekennzeichnet,**
**dass** die Vorschubbewegung (14) des Laserstrahls (6) von einer oszillierenden Bewegung (15), überlagert wird.

2. Verfahren nach Anspruch 1, **dadurch gekennzeichnet, dass** die Metallfolie (3) und weitere flächige Bestandteile des Akkumulators (1) aufgewickelt werden, sodass sich ein, zumindest im Wesentlichen, zylindrischer Aufbau des Akkumulators (1) ergibt, insbesondere wobei die Metallfolie (3) mit der rechtwinklig zur Metallfolie (3) orientierten ersten Fläche (4) des Kontaktelements (2) in Kontakt gebracht und verschweißt wird.

3. Verfahren nach Anspruch 1 oder 2, **dadurch gekennzeichnet, dass** ein Bereich (10) der Metallfolie, vorzugsweise vor dem Aufwickeln, umgebogen, insbesondere um 180° umgebogen, wird, wobei die Metallfolie im Bereich der Umbiegung (11) mit dem Kontaktelement (2) verschweißt wird.

4. Verfahren nach einem der vorigen Ansprüche, **dadurch gekennzeichnet, dass** die Metallfolie (3), insbesondere der mit dem Kontaktelement (2) zu verbindenden Bereich der Metallfolie (3), gegenüber anderen schichtförmigen Bestandteilen des Akkumulators (1) in Richtung des Kontaktelements (2), insbesondere wobei die Metallfolie (3) gegenüber anderen schichtförmigen Bestandteilen des Akkumulators (1) wenigstens 1 mm, vorzugsweise wenigstens 3 mm, und/oder höchstens 8 mm, vorzugsweise höchstens 6 mm, vorsteht.

5. Verfahren nach einem der vorigen Ansprüche, **dadurch gekennzeichnet, dass** die Metallfolie (3) an einen vorspringenden Bereich (8) der ersten Fläche (4) des Kontaktelements (2) angeschweißt wird, wobei der vorspringende Bereich (8) vorzugsweise durch eine Sicke (9) gebildet ist, insbesondere wobei sich die Metallfolie (3) durch mit dem vorspringenden Bereich (8) kreuzt.

6. Verfahren nach einem der vorigen Ansprüche, **dadurch gekennzeichnet, dass** ein, vorzugsweise als Kontaktbolzen ausgeführtes, Polelement (17) mit dem Kontaktelement (2) verschweißt wird, insbesondere wobei das Verschweißen des Kontaktelements (2) mit dem Polelement (17) und das Verschweißen der Metallfolie (3) mit dem Polelement (17) mit demselben Laser (6) erfolgt.

7. Verfahren nach Anspruch 6, **dadurch gekennzeichnet, dass** das Polelement (17) eine Dichtfläche (18) aufweist, insbesondere wobei beim Verbinden des Polelements (17) mit dem Kontaktelement (2) Schweißnähte zum Verbinden der Metallfolie (3) mit dem Kontaktelement (2) durch das Polelement (17), insbesondere durch die Dichtfläche (18) des Polelements (17) zumindest teilweise überdeckt werden.

8. Verfahren nach einem der vorigen Ansprüche, **dadurch gekennzeichnet, dass** als Laser ein Faserlaser, insbesondere ein Singlemode-Faserlaser mit einer Wellenlänge von 1070 nm verwendet wird.

9. Verfahren nach einem der vorigen Ansprüche, **dadurch gekennzeichnet, dass** der Laser beim Verschweißen der Metallfolie (3) mit dem Kontaktelement (2) und/oder beim Verschweißen des Kontaktelements (2) mit dem Polelement (17) als Dauerstrich-Laser betrieben wird, insbesondere wobei die Leistung des Lasers wenigstens 100 W, besonders bevorzugt wenigstens 200 W und/oder höchstens 700 W beträgt.

10. Verfahren nach einem der vorigen Ansprüche, **dadurch gekennzeichnet, dass** der Laser mit einer Fokussieroptik fokussiert wird, wobei die Fokussieroptik bevorzugt eine Brennweite von wenigstens 10 mm, vorzugsweise wenigstens 100 mm und/oder höchstens 5000 mm, vorzugsweise höchstens 500 mm, aufweist.

11. Verfahren nach einem der vorigen Ansprüche, **dadurch gekennzeichnet, dass** der verwendete Laserstrahl (6) einen Fokusdurchmesser von wenigstens 1 µm, vorzugsweise wenigstens 10 µm und/oder höchstens 500 µm, vorzugsweise höchstens 50 µm aufweist. Ich

12. Verfahren nach einem der vorigen Ansprüche, **dadurch gekennzeichnet, dass** die Vorschubgeschwindigkeit des Laserstrahls (6) entlang der erzeugten Schweißnaht wenigstens 10 mm/s, vorzugsweise wenigstens 70 mm/s, und/oder höchstens 200 mm/s, vorzugsweise höchstens 150 mm/s, beträgt.

13. Verfahren nach einem der vorigen Ansprüche, **dadurch gekennzeichnet, dass** die Frequenz der oszillierenden Bewegung (15) wenigstens 100 Hz, vorzugsweise wenigstens 500Hz und/oder höchstens 5000 Hz, vorzugsweise höchstens 1500 Hz beträgt und/oder die Amplitude (16) der oszillierenden Bewegung wenigstens 0,02 mm, vorzugsweise wenigstens 0,1mm, und/oder höchstens 0,5 mm, vorzugsweise höchstens 1mm, beträgt.

14. Akkumulator (1), herstellbar durch ein Verfahren nach einem der Ansprüche 1 bis 13.

## Claims

1. Method for producing a rechargeable battery (1), wherein a metal foil (3) is welded to a contact element (2) for contacting an electrode of the rechargeable battery (1), wherein an edge region of the metal foil (3) is brought into contact with a first surface (4) of the contact element (2) and is welded to the contact element (2) by the application of a laser beam (6) to a second surface (5) of the contact element (2) facing away from the first surface (4) of the contact element (2),
**characterized in that**
the advancing movement (14) of the laser beam (6) is superimposed by an oscillating movement (15).

2. Method according to claim 1, **characterized in that** the metal foil (3) and further flat components of the rechargeable battery (1) are wound up so that an at least essentially cylindrical structure of the rechargeable battery (1) results, in particular wherein the metal foil (3) is brought into contact with the first surface (4), oriented at right angles to the metal foil (3), of the contact element (2) and welded.

3. Method according to claim 1 or 2, **characterized in that** a region (10) of the metal foil is bent over, in particular bent over by 180°, preferably before being wound up, wherein the metal foil is welded to the contact element (2) in the region of the bend (11).

4. Method according to one of the preceding claims, **characterized in that** the metal foil (3), in particular the region of the metal foil (3) to be connected to the contact element (2), projects with respect to other layered components of the rechargeable battery (1) in the direction of the contact element (2), in particular wherein the metal foil (3) projects with respect to other layered components of the rechargeable battery (1) at least 1 mm, preferably at least 3 mm, and/or at most 8 mm, preferably at most 6 mm.

5. Method according to one of the preceding claims, **characterized in that** the metal foil (3) is welded to a projecting region (8) of the first surface (4) of the contact element (2), wherein the projecting region (8) is preferably formed by a bead (9), in particular wherein the metal foil (3) crosses with the projecting region (8).

6. Method according to one of the preceding claims, **characterized in that** a pole element (17), preferably configured as a contact bolt, is welded to the contact element (2), in particular wherein the welding of the contact element (2) to the pole element (17) and the welding of the metal foil (3) to the pole element (17) are performed with the same laser (6).

7. Method according to claim 6, **characterized in that** the pole element (17) has a sealing surface (18), in particular wherein, when the pole element (17) is connected to the contact element (2), weld seams for connecting the metal foil (3) to the contact element (2) are at least partially covered by the pole element (17), in particular by the sealing surface (18) of the pole element (17).

8. Method according to one of the preceding claims, **characterized in that** a fiber laser, in particular a single-mode fiber laser with a wavelength of 1070 nm, is used as the laser.

9. Method according to one of the preceding claims, **characterized in that** the laser is operated as a continuous wave laser during welding of the metal foil (3) to the contact element (2) and/or during welding of the contact element (2) to the pole element (17), in particular wherein the power of the laser is at least 100 W, particularly preferably at least 200 W and/or at most 700 W.

10. Method according to one of the preceding claims, **characterized in that** the laser is focused with a focusing optics, wherein the focusing optics preferably has a focal length of at least 10 mm, preferably at least 100 mm and/or at most 5000 mm, preferably at most 500 mm.

11. Method according to one of the preceding claims, **characterized in that** the laser beam (6) used has a focal diameter of at least 1 µm, preferably at least 10 µm and/or at most 500 µm, preferably at most 50 µm.

12. Method according to one of the preceding claims, **characterized in that** the advancing speed of the laser beam (6) along the produced weld seam is at least 10 mm/s, preferably at least 70 mm/s, and/or at most 200 mm/s, preferably at most 150 mm/s.

13. Method according to one of the preceding claims, **characterized in that** the frequency of the oscillating movement (15) is at least 100 Hz, preferably at least 500Hz and/or at most 5000 Hz, preferably at most 1500 Hz, and/or the amplitude (16) of the oscillating movement is at least 0.02 mm, preferably at least 0.1 mm, and/or at most 0.5 mm, preferably at most 1 mm.

14. Rechargeable battery (1) producible by a method according to one of claims 1 to 13.

## Revendications

1. Procédé de fabrication d'un accumulateur (1), une feuille métallique (3) étant soudée à un élément de contact (2) pour la mise en contact avec une électrode de l'accumulateur (1), une zone de bordure de la feuille métallique (3) étant mise en contact avec une première surface (4) de l'élément de contact (2) et étant soudée à l'élément de contact (2) par l'application d'un rayon laser (6) à une seconde surface (5) de l'élément de contact (2) opposée à la première surface (4) de l'élément de contact (2),
**caractérisé en ce que**
le mouvement d'avance (14) du rayon laser (6) est superposé par un mouvement oscillant (15).

2. Procédé selon la revendication 1, **caractérisé en ce que** la feuille métallique (3) et d'autres composants plans de l'accumulateur (1) sont enroulés, de sorte qu'il en résulte une construction au moins essentiellement cylindrique de l'accumulateur (1), en particulier la feuille métallique (3) étant mise en contact et soudée à la première surface (4) de l'élément de contact (2) orientée perpendiculairement à la feuille métallique (3).

3. Procédé selon la revendication 1 ou 2, **caractérisé en ce qu'**une zone (10) de la feuille métallique est pliée, en particulier de 180°, de préférence avant l'enroulement, la feuille métallique étant soudée à l'élément de contact (2) dans la zone du pliage (11).

4. Procédé selon l'une quelconque des revendications précédentes, **caractérisé en ce que** la feuille métallique (3), en particulier la zone de la feuille métallique (3) à relier à l'élément de contact (2), fait saillie en direction de l'élément de contact (2) par rapport à d'autres composants stratifiés de l'accumulateur (1), en particulier la feuille métallique (3) fait saillie par rapport à d'autres composants stratifiés de l'accumulateur (1) d'au moins 1 mm, de préférence d'au moins 3 mm, et/ou d'au plus 8 mm, de préférence d'au plus 6 mm.

5. Procédé selon l'une quelconque des revendications précédentes, **caractérisé en ce que** la feuille métallique (3) est soudée à une zone en saillie (8) de la première surface (4) de l'élément de contact (2), la zone en saillie (8) étant de préférence formée par un bourrelet (9), en particulier la feuille métallique (3) traversant la zone en saillie (8).

6. Procédé selon l'une quelconque des revendications précédentes, **caractérisé en ce qu'**un élément polaire (17), de préférence réalisé sous la forme d'un boulon de contact, est soudé à l'élément de contact (2), en particulier le soudage de l'élément de contact (2) à l'élément polaire (17) et le soudage de la feuille métallique (3) à l'élément polaire (17) s'effectuant avec le même laser (6).

7. Procédé selon la revendication 6, **caractérisé en ce que** l'élément polaire (17) présente une surface d'étanchéité (18), en particulier des cordons de soudure pour relier la feuille métallique (3) à l'élément de contact (2) étant au moins partiellement recouverts par l'élément polaire (17), en particulier par la surface d'étanchéité (18) de l'élément polaire (17), lorsque l'élément polaire (17) est relié à l'élément de contact (2).

8. Procédé selon l'une quelconque des revendications précédentes, **caractérisé en ce que** l'on utilise comme laser un laser de phase, en particulier un laser de phase monomode ayant une longueur d'onde de 1070 nm.

9. Procédé selon l'une quelconque des revendications précédentes, **caractérisé en ce que** le laser fonctionne comme un laser à onde continue pendant le soudage de la feuille métallique (3) à l'élément de contact (2) et/ou pendant le soudage de l'élément de contact (2) à l'élément polaire (17), en particulier la puissance du laser étant d'au moins 100 W, de manière particulièrement préférée d'au moins 200 W et/ou d'au plus 700 W.

10. Procédé selon l'une quelconque des revendications précédentes, **caractérisé en ce que** le laser est focalisé à l'aide d'une optique de focalisation, l'optique de focalisation ayant de préférence une longueur focale d'au moins 10 mm, de préférence d'au moins 100 mm et/ou d'au plus 5000 mm, de préférence d'au plus 500 mm.

11. Procédé selon l'une quelconque des revendications précédentes, **caractérisé en ce que** le rayon laser (6) utilisé présente un diamètre de focalisation d'au moins 1 µm, de préférence d'au moins 10 µm et/ou d'au plus 500 µm, de préférence d'au plus 50 µm.

12. Procédé selon l'une quelconque des revendications précédentes, **caractérisé en ce que** la vitesse d'avance du rayon laser (6) le long du cordon de soudure produit est d'au moins 10 mm/s, de préférence d'au moins 70 mm/s, et/ou d'au plus 200 mm/s, de préférence d'au plus 150 mm/s.

13. Procédé selon l'une quelconque des revendications précédentes, **caractérisé en ce que** la fréquence du mouvement oscillant (15) est d'au moins 100 Hz, de préférence d'au moins 500 Hz et/ou d'au plus 5000 Hz, de préférence d'au plus 1500 Hz, et/ou l'amplitude (16) du mouvement oscillant est d'au moins 0,02 mm, de préférence d'au moins 0,1 mm, et/ou d'au plus 0,5 mm, de préférence d'au plus 1 mm.

14. Accumulateur (1) pouvant être produit par un procédé selon l'une quelconque des revendications 1 à 13.
